# EUROPÄISCHE PATENTANMELDUNG

(11) **EP 3 058 807 A1**
(43) Veröffentlichungstag der Anmeldung: **24.08.2016**
(21) Anmeldenummer: 15000469.5
(22) Anmeldetag: 17.02.2015
(51) Int. Cl.: A01G 3/08, F16B 7/14

(54) **Handgeführtes Arbeitsgerät mit einem Teleskopabschnitt**

(71) Anmelder: Andreas Stihl AG & Co. KG, 71336 Waiblingen (DE)
(72) Erfinder: Densborn, Gerd, 71334 Waiblingen (DE); Föhrenbach, Jan, 70734 Fellbach (DE); Barth, Benjamin, 71576 Burgstetten (DE)
(74) Vertreter: Reinhardt, Annette

(57) **Zusammenfassung**

Ein handgeführtes Arbeitsgerät besitzt einen Antriebsmotor (41) und eine Werkzeugeinheit (3), die ein von dem Antriebsmotor (41) angetriebenes Werkzeug umfasst. Das Arbeitsgerät besitzt ein Führungsrohr (4) mit einem Teleskopabschnitt (9), der ein Außenrohr (11) und ein darin längsverschiebbar geführtes Innenrohr (10) umfasst. Durch das Führungsrohr (4) sind Mittel zur Übertragung der Antriebsenergie für das Werkzeug geführt. Zur Fixierung des Innenrohrs (10) gegenüber dem Außenrohr (11) ist eine Klemmvorrichtung (12) vorgesehen. Die Klemmvorrichtung (12) umfasst ein Spannstück (13), das gegenüber dem Innenrohr (10) drehbar gelagert ist und über eine Gewindeverbindung mit dem Außenrohr (11) verbunden ist. Die Klemmvorrichtung (12) umfasst mindestens einen am Außenumfang des Innenrohrs (10) angeordneten, gewölbten Spannring (14). Ein Zusammendrücken des Spannrings in Richtung einer Längsmittelachse (39) des Führungsrohrs (4) bewirkt eine Verkleinerung einer Öffnung des Spannrings. Der mindestens eine Spannring (14) stützt sich dabei an der einen axialen Seite gegenüber dem Außenrohr und an der anderen axialen Seite gegenüber dem Spannstück (13) ab.

## Beschreibung

Die Erfindung betrifft ein handgeführtes Arbeitsgerät mit einem Teleskopabschnitt der im Oberbegriff des Anspruchs 1 angegebenen Gattung.

Aus der DE 196 18 024 A1 ist ein Hochentaster bekannt, dessen Führungsrohr einen Teleskopabschnitt besitzt. Um das Außenrohr des Teleskopabschnitts auf dem Innenrohr zu fixieren, ist ein Klemmstück vorgesehen, das mittels Schrauben tangential zusammengeozogen und dadurch fixiert wird.

Der Erfindung liegt die Aufgabe zugrunde, ein handgeführtes Arbeitsgerät mit einem Teleskopabschnitt der gattungsgemäßen Art zu schaffen, das einen einfachen Aufbau besitzt und eine vereinfachte Bedienung ermöglicht.

Diese Aufgabe wird durch ein handgeführtes Arbeitsgerät mit einem Teleskopabschnitt mit den Merkmalen des Anspruchs 1 gelöst.

Für die Klemmvorrichtung, die das Innenrohr gegenüber dem Außenrohr des Teleskopabschnittes fixiert, ist ein Spannstück vorgesehen, das über eine Gewindeverbindung mit dem Außenrohr verbunden ist und das gegenüber dem Innenrohr drehbar gelagert ist. Es ist mindestens ein am Außenumfang des Innenrohrs angeordneter, gewölbter Spannring vorgesehen, der sich an einer axialen Seite gegenüber dem Außenrohr und an der anderen axialen Seite gegenüber dem Spannstück abstützt. Wird der Spannring in Richtung einer Längsmittelachse des Führungsrohrs zusammengedrückt, so verkleinert sich die Öffnung des Spannrings.

Ein Drehen des Spannstücks bewirkt aufgrund der Gewindeverbindung eine axiale Bewegung des Spannstücks gegenüber dem Außenrohr. Wird das Spannstück so gedreht, dass der Spannring in Richtung der Längsmittelachse des Führungsrohrs zusammengedrückt wird, so verkleinert sich die Öffnung des Spannrings, wodurch der Spannring auf dem Innenrohr festgeklemmt wird. Dadurch ist die axiale Position des Spannrings auf dem Innenrohr festgelegt. Dadurch, dass sich der Spannring an einer Seite gegenüber dem Außenrohr und an der anderen axialen Seite gegenüber dem Spannstück abstützt, das seinerseits mit dem Außenrohr über die Gewindeverbindung verbunden ist, ist auch die axiale Position des Außenrohrs gegenüber dem Innenrohr festgelegt. Über das Spannstück ist die Spannkraft durch entsprechend weites Drehen des Spannstücks auf einfache Weise einstellbar.

Die Gewindeverbindung kann dabei eine Gewindeverbindung sein, die sich über mehrere vollständige Gewindegänge erstreckt. Die Gewindegänge können jedoch auch unterbrochen sein. Die Gewindeverbindung kann auch nach Art einer Bajonettverbindung ausgebildet sein, deren Gewindegang sich über weniger als 360° erstreckt. Dabei können auch mehrere parallel zueinander verlaufende Teilgewindegänge vorgesehen sein. Die Gewindeverbindung kann beispielsweise so vorgesehen sein, dass zum Fixieren und Lösen eine drei Viertel Umdrehung benötigt wird. Die Gewindeverbindung kann vorteilhaft mindestens eine Raststellung an einer Endposition aufweisen. Vorteilhaft sind eine erste Raststellung bei gelöster Klemmvorrichtung und eine zweite Raststellung bei fixierter Klemmvorrichtung vorgesehen.

Die Klemmvorrichtung kann einfach durch bloßes Drehen des Spannstücks gelöst und fixiert werden. Die Klemmvorrichtung besitzt keine Bauteile wie Schrauben oder dergleichen, die in vollständig gelöstem Zustand der Klemmvorrichtung verloren gehen können. Ein Werkzeug wird zum Lösen und Fixieren der Klemmvorrichtung nicht benötigt. Über den mindestens einen Spannring kann eine einfache und sichere Fixierung des Innenrohrs gegenüber dem Außenrohr erfolgen. Auch eine Klemmung unrunder Querschnittsformen ist möglich. Die gewünschte Klemmkraft kann durch entsprechende Auslegung des Spannrings und durch Anpassung der Anzahl der Spannringe eingestellt werden. Bei nachlassender Spannkraft, beispielsweise durch Alterung, ist ein einfacher Austausch des mindestens einen Spannrings möglich.

Vorteilhaft ist am Außenrohr ein Endstück fixiert, das ein Außengewinde der Gewindeverbindung trägt. Da das Außenrohr nicht selbst das Außengewinde trägt, ist ein einfacher Aufbau des Außenrohrs möglich. Die Gewindeverbindung ist vorteilhaft als Feingewinde mit geringer Steigung ausgebildet. Dadurch ergibt sich eine gute Einstellbarkeit der Spannkraft. Die Steigung des Gewindes beträgt vorteilhaft weniger als 5 mm, insbesondere weniger als 3 mm. Aufgrund der geringen Gewindesteigung ist das beim Drehen des Spannstücks aufzubringende Drehmoment gering, so dass zum Drehen des Spannstücks kein Werkzeug benötigt wird. Das Gewinde kann vorteilhaft durch einzelne Gewindeabschnitte gebildet sein, die in Umfangsrichtung voneinander beabstandet sind. Dadurch können das Spannstück und das Endstück in axialer Richtung übereinander geschoben werden, und die Klemmvorrichtung kann durch Drehen des Spannstücks um deutlich weniger als eine Umdrehung fixiert werden.

Vorteilhaft weisen das Innenrohr und das Außenrohr einen von der Kreisform abweichenden Querschnitt auf. Dadurch ist über die Außenkontur von Innenrohr und Außenrohr eine Verdrehsicherung gegeben. Vorteilhaft sind zusätzliche Führungsteile zur Verdrehsicherung vorgesehen. Das Innenrohr und das Außenrohr sind insbesondere als geschweißte Rohre mit geringer Wandstärke ausgebildet. Der unrunde Querschnitt kann beim Richten der geschweißten Rohre auf einfache Weise hergestellt werden, insbesondere, wenn der Querschnitt ein abgeflachter Kreisquerschnitt, vorzugsweise ein an mehreren Seiten abgeflachter Kreisquerschnitt ist. Der Querschnitt des Innenrohrs weist vorteilhaft ebene Seiten auf, die über abgerundete Ecken verbunden sind. Vorteilhaft ist das Innenrohr an mindestens einer seiner ebenen Seiten verdrehsicher gegenüber dem Außenrohr gehalten. Das Spannstück ist vorteilhaft gegenüber dem Innenrohr drehbar gelagert. Beim Fixieren der Klemmvorrichtung wird das Spannstück gegenüber dem Innenrohr und gegenüber dem Außenrohr gedreht, während Innenrohr und Außenrohr verdrehsicher zueinander gehalten sind.

Vorteilhaft liegt das Endstück mindestens teilweise an der Außenkontur des Innenrohrs an und positioniert das Innenrohr und das Außenrohr verdrehsicher zueinander. Das Endstück dient demnach vorteilhaft sowohl zur verdrehsicheren Positionierung von Innenrohr und Außenrohr zueinander als auch dazu, die Gewindeverbindung zum Spannstück herzustellen. Bevorzugt stützt sich der mindestens eine Spannring über das Endstück an dem Außenrohr ab, so dass über das Endstück gleichzeitig eine gute Krafteinleitung in das Außenrohr sichergestellt wird.

Vorteilhaft liegt das Endstück nur an den ebenen Seiten des Innenrohrs und nicht an den abgerundeten Ecken an. Die ebenen Seiten des Innenrohrs können einfach mit vergleichsweise hoher Genauigkeit gefertigt werden. Über die abgerundeten Ecken ist ein Toleranzausgleich möglich, insbesondere, wenn das Innenrohr als längsgeschweißtes Rohr ausgebildet ist, dessen ebene Seiten beim Richten des Rohrs hergestellt werden.

Es ist vorteilhaft vorgesehen, dass das Spannstück eine Druckfläche aufweist, an der sich der mindestens eine Spannring axial abstützt. Das Endstück besitzt vorteilhaft an seiner der Druckfläche abgewandten Seite Mittel zur Zentrierung des Spannstücks. Über das Endstück kann so auf einfache Weise eine gute Lagesicherung des Spannstücks erreicht werden. Insbesondere bei einem Außenrohr mit unrundem Querschnitt kann sich das Spannstück nicht oder nur abschnittsweise an der Außenseite des Außenrohrs abstützen, da das Spannstück gegenüber dem Innenrohr drehbar sein muss. Bevorzugt liegt das Spannstück nicht am Außenumfang des Innenrohrs an. Über das Endstück kann auf einfache Weise eine Zentrierung des Spannstücks erreicht werden.

Das Spannstück ist insbesondere als Hülse ausgebildet, die in verspanntem Zustand der Klemmvorrichtung mindestens teilweise über die Mittel zur Zentrierung ragt. Durch die hülsenförmige Ausbildung des Spannstücks ergibt sich ein kompaktes Äußeres. Ein Hängenbleiben an nach außen ragenden Konturen, wie sie bei herkömmlichen Klemmeinrichtungen bekannt sind, wird dadurch vermieden. Die Mittel zur Zentrierung umfassen bevorzugt einen Rand, der einen Ringraum zwischen dem Außenrohr und dem Spannstück in verspanntem Zustand der Klemmvorrichtung mindestens teilweise verschließt. Der Rand bewirkt dadurch zugleich einen Schutz des Ringraums vor Verschmutzung. Vorteilhaft bildet das Endstück keinen Anschlag für das Spannstück. Das Spannstück kann vorteilhaft frei über die Mittel zur Zentrierung geschoben werden. Dadurch kann die Klemmkraft auch dann, wenn die Spannkraft des mindestens einen Spannrings nachgelassen hat oder wenn der Einsatz einer geringeren Anzahl von Spannringen vorgesehen ist, vollständig gespannt werden.

Ein einfacher Aufbau ergibt sich, wenn das Endstück auf das Außenrohr aufgeclipst ist.

Der mindestens eine Spannring besitzt vorteilhaft radial nach innen ragende Klemmfinger, die in verspanntem Zustand der Klemmvorrichtung mit ihrem freien Ende gegen das Innenrohr drücken. Der mindestens eine Spannring liegt vorteilhaft in ungespanntem Zustand am Innenrohr an. Dadurch wird ein geringer Klemmweg erreicht. Der Spannring ist dabei vorteilhaft in Längsrichtung des Innenrohrs leicht verschiebbar, um eine einfache Einstellbarkeit der gewünschten Länge des Teleskopabschnitts zu erlauben. Um ein axiales Zusammendrücken des Spannrings zu ermöglichen, ist vorteilhaft vorgesehen, dass der Außenrand des mindestens einen Spannrings zum Spannstück einen Abstand in radialer Richtung besitzt. Der Spannring kann sich dadurch bei axialem Zusammendrücken auch nach außen aufweiten. Dabei ist ein geringer radialer Spalt zwischen dem Spannring und dem Spannstück ausreichend. Vorteilhaft sind mehrere Spannringe vorgesehen. Benachbarte Spannringe liegen dabei bevorzugt jeweils benachbart zu ihren Innenrändern oder benachbart zu ihren Außenrändern aneinander an. Im Querschnitt ergibt sich dadurch ein zickzackförmiger Verlauf der aneinander anliegenden Spannringe. Der mindestens eine Spannring besteht vorteilhaft aus Kunststoff. Der Kunststoff ist insbesondere ein POM (Polyoxymethylen).

Vorteilhaft ist eine Dichtung vorgesehen, die das Eindringen von Verschmutzungen zwischen das Innenrohr und das Außenrohr vermeidet. Die Dichtung ist vorteilhaft zwischen dem mindestens einen Spannring und dem Endstück vorgesehen. Es kann jedoch auch vorteilhaft sein, dass die Dichtung zwischen dem Spannring und einer Druckfläche des Spannstücks vorgesehen ist. Dadurch wird auch der Raum, in dem der mindestens eine Spannring angeordnet ist, gegenüber der Umgebung abgedichtet. Der Innenquerschnitt der Dichtung ist vorteilhaft auf den Außenquerschnitt des Innenrohrs angepasst. Das Innenrohr und das Außenrohr weisen vorteilhaft jeweils eine in Längsrichtung verlaufende Schweißnaht auf. Durch die Ausbildung als geschweißte Rohre können das Innenrohr und das Außenrohr gegenüber einem stranggepressten Rohr mit kreisförmigem Querschnitt mit verringerter Wandstärke ausgeführt werden. Dadurch ergibt sich ein verringertes Gewicht des Arbeitsgerätes.

Um eine gute Führung des Außenrohrs auf dem Innenrohr zu erreichen, ist vorteilhaft vorgesehen, dass an dem in das Außenrohr ragenden Ende des Innenrohrs ein Führungsteil angeordnet ist, das das Innenrohr im Außenrohr führt. Vorteilhaft sind weitere Führungsteile zwischen Innenrohr und Außenrohr in einem Abstand zum Ende des Innenrohrs vorgesehen.

Der Antriebsmotor ist vorteilhaft Teil einer Antriebseinheit, die an einem ersten Ende des Führungsrohrs angeordnet ist. Die Werkzeugeinheit ist vorteilhaft an einem zweiten Ende des Führungsrohrs angeordnet, wobei durch das Führungsrohr eine Antriebswelle ragt, die als Teleskopwelle ausgebildet ist. Die Antriebswelle dient zur Übertragung der Antriebsenergie, und zwar als Rotation der Antriebswelle um ihre Längsachse. Die Antriebswelle ist vorteilhaft über mindestens ein Lagerteil in dem Innenrohr gelagert. Vorteilhaft sind mehrere, in axialem Abstand zueinander angeordnete Lagerteile vorgesehen. Der Antriebsmotor kann jedoch auch an der Werkzeugeinheit angeordnet sein. Der Antriebsmotor ist dann vorteilhaft als Elektromotor ausgebildet und über ein Kabel, insbesondere ein Spiralkabel, mit einer am anderen Ende des Führungsrohrs angeordneten Energieversorgung, insbesondere einem Akku, verbunden. Das Kabel ist dabei vorteilhaft durch das Führungsrohr geführt.

Ausführungsbeispiele der Erfindung werden im Folgenden anhand der Zeichnung erläutert. Es zeigen:
- Fig. 1: eine perspektivische Darstellung eines Hochentasters,
- Fig. 2: eine schematische Darstellung der Antriebseinheit des Hochentasters aus Fig. 1,
- Fig. 3: einen Schnitt durch eine Klemmvorrichtung des Hochentasters aus Fig. 1,
- Fig. 4: einen Schnitt entlang der Linie IV-IV in Fig. 3,
- Fig. 5: einen Schnitt entlang der Linie V-V in Fig. 3,
- Fig. 6: einen Schnitt entlang der Linie VI-VI in Fig. 3,
- Fig. 7: eine perspektivische Darstellung eines Endabschnitts des Innenrohrs,
- Fig. 8: eine perspektivische Darstellung eines Spannrings,
- Fig. 9: eine Draufsicht auf den Spannring aus Fig. 8,
- Fig. 10: eine Seitenansicht in Richtung des Pfeils X in Fig. 9,
- Fig. 11: eine schematische Darstellung eines Ausführungsbeispiels eines Hochentasters.

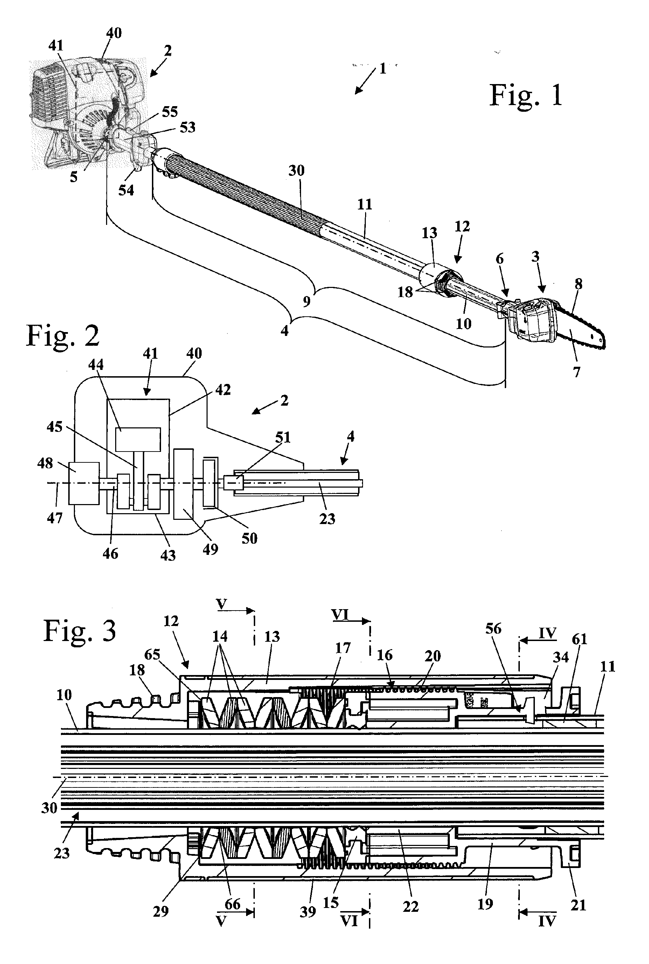

Fig. 1 zeigt als Ausführungsbeispiel für ein handgeführtes Arbeitsgerät mit einem Teleskopabschnitt einen Hochentaster 1. Anstatt eines Hochentasters kann auch ein anderes handgeführtes Arbeitsgerät wie beispielsweise ein Heckenschneider oder dergleichen vorgesehen sein. Der Hochentaster 1 besitzt eine Antriebseinheit 2 mit einem Gehäuse 40, in dem ein in Fig. 1 schematisch gezeigter Antriebsmotor 41 angeordnet ist.

Der Hochentaster 1 besitzt außerdem eine Werkzeugeinheit 3, die über ein Führungsrohr 4 mit der Antriebseinheit 2 verbunden ist. Die Antriebseinheit 2 ist dabei an einem ersten Ende 5 des Führungsrohrs 4 angeordnet, und die Werkzeugeinheit 3 ist an einem zweiten Ende 6 des Führungsrohrs 4 gehalten. Die Werkzeugeinheit 3 besitzt eine Führungsschiene 7, an der eine Sägekette 8 umlaufend angetrieben ist.

Das Führungsrohr 4 besitzt einen Teleskopabschnitt 9, der sich über einen Großteil der Länge des Führungsrohrs 4 erstreckt. Das Führungsrohr besitzt eine Längsmittelachse 30. Benachbart zum ersten Ende 5 des Führungsrohrs 4 ist am Führungsrohr 4 ein Handgriff 53 angeordnet. Am Handgriff 53 sind Bedienelemente angeordnet, nämlich ein Gashebel 54 zur Bedienung des Antriebsmotors 41 sowie eine Gashebelsperre 55.

Der Teleskopabschnitt 9 besitzt ein Innenrohr 10, an dem die Werkzeugeinheit 3 festgelegt ist. Der Teleskopabschnitt 9 umfasst außerdem ein Außenrohr 11, das mit der Antriebseinheit 2 fest verbunden ist. Das Innenrohr 10 ist gegenüber dem Außenrohr 11 über eine lösbare Klemmvorrichtung 12 fixiert. Die Klemmvorrichtung 12 besitzt ein Spannstück 13, das gegenüber dem Innenrohr 10 und dem Außenrohr 11 drehbar gelagert ist. Die Gestaltung der Klemmvorrichtung 12 wird im Folgenden noch näher erläutert.

Fig. 2 zeigt den Aufbau der Antriebseinheit 2 schematisch. Im Gehäuse 40 ist der Antriebsmotor 41 angeordnet, der als Einzylinder-Verbrennungsmotor ausgebildet ist. Der Antriebsmotor 41 ist insbesondere ein Zweitaktmotor oder ein gemischgeschmierter Viertaktmotor. Der Antriebsmotor 41 besitzt einen Zylinder 42, in dem ein Kolben 44 hin- und hergehend gelagert ist. Der Kolben 44 treibt über einen Pleuel 45 eine in einem Kurbelgehäuse 43 um eine Drehachse 47 drehbar gelagerte Kurbelwelle 46 rotierend an. Die Antriebseinheit 2 besitzt eine Anwerfvorrichtung 48 zum Starten des Antriebsmotors 41. Die Anwerfvorrichtung 48 ist vorteilhaft ein von Hand zu startender Seilzugstarter. Die Anwerfvorrichtung 48 kann jedoch auch eine elektrisch betätigte Anwerfvorrichtung sein. An der der Anwerfvorrichtung 48 abgewandt liegenden Seite des Antriebsmotors 41 ist ein Lüfterrad 49 an der Kurbelwelle 46 festgelegt. Zwischen dem Lüfterrad 49 und dem Führungsrohr 4 ist eine Fliehkraftkupplung 50 angeordnet, deren Abtriebsteil über ein Koppelteil 51 mit einer Antriebswelle 23 verbunden ist. Die Antriebswelle 23 durchragt das Führungsrohr 4 und ist ebenfalls teleskopartig aufgebaut, wie im Folgenden noch näher erläutert wird.

Fig. 3 zeigt den Aufbau der Klemmvorrichtung 12 im Einzelnen. Am Ende des Außenrohrs 11 ist ein Endstück 19 fixiert. Das andere Ende des Außenrohrs 11 ist im Ausführungsbeispiel an der Antriebseinheit 2 festgelegt. Das Endstück 19 ist über eine schematisch gezeigte Rastverbindung 56 drehfest und axial, also in Richtung der Längsmittelachse 30, fest mit dem Außenrohr 11 verbunden. Das Endstück 19 bildet eine Anlagefläche für eine Dichtung 15, die am Außenumfang des Innenrohrs 10 anliegt und den Innenraum zwischen Innenrohr 10 und Außenrohr 11 abdichtet. Der Innenquerschnitt der Dichtung 15 ist dabei auf den Außenquerschnitt des Innenrohrs 10 angepasst.

Das Endstück 19 trägt ein Außengewinde 20 einer Gewindeverbindung 16. Über die Gewindeverbindung 16 sind das Spannstück 13 und das Endstück 19 miteinander verbunden. Wie Fig. 3 zeigt, ist die Gewindeverbindung 16 als Feingewinde mit geringer Gewindesteigung ausgebildet. Die Gewindesteigung beträgt vorteilhaft weniger als 5 mm, insbesondere weniger als 3 mm. Auch eine größere Gewindesteigung, insbesondere eine Gewindesteigung von etwa 5 mm bis etwa 10 mm, kann jedoch vorteilhaft sein. Dadurch kann ein einfaches und schnelles Fixieren und Lösen der Klemmvorrichtung 12 bei geringem Verdrehwinkel des Spannstücks 13 erreicht werden. Das Spannstück 13 trägt ein Innengewinde 17 der Gewindeverbindung 16. Das Spannstück 13 ist über die Gewindeverbindung 17 gegenüber dem Außenrohr 11 beweglich. Zum Innenrohr 10 hat das Spannstück 13 keinen Kontakt. Das Spannstück 13 ist gegenüber dem Innenrohr 10 drehbar und axial verschiebbar angeordnet. In der Wirkverbindung zwischen dem Außenrohr 11 und dem Innenrohr 10 wirken eine Vielzahl von Spannringen 14, die am Außenumfang des Innenrohrs 10 angeordnet sind. Werden die Spannringe 14 in axialer Richtung, also in Richtung der Längsmittelachse 30 des Führungsrohrs 4 zusammengedrückt, so verkleinert sich die Öffnung der Spannringe 14, wodurch sich die Spannringe 14 am Außenumfang des Innenrohrs 10 festklemmen. Die Spannringe 14 sind in axialer Richtung zwischen einer Druckfläche 29 des Spannstücks 13 und dem Endstück 19 angeordnet.

Wie Fig. 3 zeigt, stützen sich die Spannringe 14 jeweils mit einer axialen Seite 65 gegenüber dem Spannstück 13 und mit der anderen axialen Seite 66 gegenüber dem Endstück 19 ab. Die Spannringe 14 sind dabei nach Art einer Reihenschaltung von Federn hintereinandergeschaltet. Die auf die Spannringe 14 ausgeübte Kraft wirkt zwischen dem Außenrohr 11 und dem Spannstück 13 in Richtung der Längsmittelachse 30. Wird das Spannstück 13 so gedreht, dass die Druckfläche 29 sich in Richtung auf das Endstück 19 bewegt, so werden die Spannringe 14 in Richtung der Längsmittelachse 30 zusammengedrückt, wodurch sich deren Innendurchmesser verringert. Dadurch fixieren die Spannringe 14 das Innenrohr 10. Die Spannringe 14 klemmen dabei auf dem Innenrohr 10. Die Spannringe 14 sind gleichzeitig zwischen der Anlagefläche 29 und dem Endstück 19 gehalten und dadurch gegenüber dem Außenrohr 11 in axialer Richtung fixiert. Durch Zusammendrücken der Spannringe 14 wird dadurch auf einfache Weise eine Fixierung des Innenrohrs 10 gegenüber dem Außenrohr 11 erreicht. Das Spannstück 13 ist hülsenförmig ausgebildet. Die Druckfläche 29 ist als nach innen ragender Rand an der der Werkzeugeinheit 3 zugewandten Seite des Spannstücks 13 ausgebildet.

Im Ausführungsbeispiel sind acht Spannringe 14 vorgesehen. Es kann jedoch auch eine andere Anzahl von Spannringen 14 vorgesehen sein.

Damit ein Drehen des Spannstücks 13 für den Bediener leicht möglich ist, besitzt das Spannstück 13 an seiner dem Außenrohr 11 abgewandten, der Werkzeugeinheit 3 zugewandten Seite Griffmulden 18, die auch in Fig. 1 gezeigt sind. Um das Greifen des Spannstücks 13 zu erleichtern, weist das Spannstück 13 an seinem Außenumfang außerdem einen Mantel 39 auf, der vorteilhaft aus einem weichen Kunststoffmaterial besteht. Das Spannstück 13 ist mit dem Mantel 39 vorteilhaft umspritzt. Wie Fig. 1 zeigt, besitzt das Spannstück 13 einen zylindrischen Außenumfang. Auch eine andere Außenkontur kann jedoch vorteilhaft sein, insbesondere, um das Greifen des Spannstücks 13 zu erleichtern. Der Außendurchmesser des Spannstücks 13 ist dabei vergleichsweise groß. Dadurch kann das Spannstück 13 vom Bediener leicht gegriffen werden, und es kann auch bei werkzeugloser Bedienung ein vergleichsweise großes Drehmoment auf das Spannstück 13 aufgebracht werden.

Wie Fig. 3 auch zeigt, ist zwischen dem Endstück 19 und dem Spannstück 13 an der den Spannringen 14 abgewandten Seite der Gewindeverbindung 16 ein Ringraum 34 gebildet. Das Endstück 19 besitzt einen radial nach außen ragenden Rand 21, der den Ringraum 34 in axialer Richtung mindestens teilweise abdeckt. Der Rand 21 dient außerdem zur Zentrierung des Spannstücks 13, wenn das Spannstück 13 in Fig. 3 so weit nach rechts geschraubt wird, dass das Spannstück 13 den Rand 21 übergreift. Das Endstück 19 besitzt außerdem einen Führungsabschnitt 22, mit dem das Endstück 19 am Außenumfang des Innenrohrs 10 anliegt. Im Ausführungsbeispiel bildet der Führungsabschnitt 22 eine Anlagefläche für die Dichtung 15. Fig. 3 zeigt auch die Antriebswelle 23.

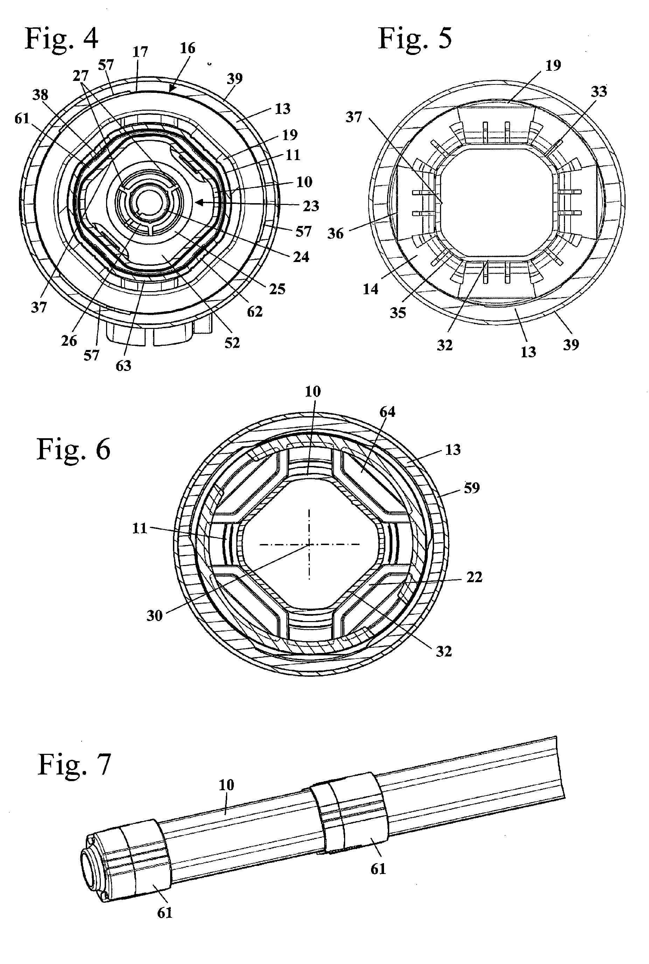

Fig. 4 zeigt die Anordnung der Antriebswelle 23 im Führungsrohr 4. Die Antriebswelle 23 durchragt das Innenrohr 10 und das Außenrohr 11. Die Antriebswelle 23 besitzt eine Innenwelle 24, die über ein Lagerelement 26 in einer Außenwelle 25 gelagert ist. Die Innenwelle 24 und die Außenwelle 25 sind drehfest miteinander verbunden. Die Innenwelle 24 ist teleskopartig in die Außenwelle 25 eingeschoben. Das Lagerelement 26 besitzt nach außen ragende Längsrippen 27, mit denen sich das Lagerelement 26 am Innenumfang der Außenwelle 25 abstützt.

Fig. 4 zeigt auch die Gestaltung des Innenrohrs 10 und des Außenrohrs 11 im Einzelnen. Das Innenrohr 10 besitzt einen unrunden, abgeflachten Querschnitt, der auch in Fig. 5 gezeigt ist. Im Ausführungsbeispiel besitzt das Innenrohr 10 vier abgeflachte, ebene Seiten 32, die über abgerundete Ecken 33 miteinander verbunden sind. An einer der ebenen Seiten 32 verläuft eine Schweißnaht 37, die sich über die gesamte Länge des Innenrohrs 10 erstreckt. An der Innenseite des Innenrohrs 10 bildet die Schweißnaht 37 im Ausführungsbeispiel eine Erhöhung. Das Innenrohr 10 ist als geschweißtes Rohr aus einem ebenen Flächenzuschnitt hergestellt. Nach dem Schweißen des Innenrohrs 10 wird das Innenrohr 10 gerichtet. Dabei werden die ebenen Seiten 32 durch Richtrollen eingedrückt, bis die gewünschte Abmessung des Innenrohrs 10, nämlich der gewünschte Abstand zwischen einander gegenüberliegenden ebenen Seiten 32, erreicht ist. Das Endstück 19 liegt im Ausführungsbeispiel mit seinem Führungsabschnitt 22 (Fig. 3) nur an den ebenen Seiten 32 des Innenrohrs 11 an und nicht an den abgerundeten Ecken 33.

Wie Fig. 4 zeigt, weist auch das Außenrohr 11 einen unrunden, abgeflachten Kreisquerschnitt auf. Auch das Außenrohr 11 besitzt eine in Längsrichtung verlaufende Schweißnaht 38. Das Außenrohr 11 ist ebenfalls als geschweißtes Rohr hergestellt und nach dem Verschweißen unter Verformung gerichtet. Beim Richten entstehen im Ausführungsbeispiel vier ebene Seiten 62, die über abgerundete Ecken 63 miteinander verbunden sind.

Wie Fig. 4 zeigt, überbrückt das Lagerteil 52 den Abstand zwischen der Außenwelle 25 und der Innenseite des Innenrohrs 10 und bewirkt dadurch eine Zentrierung der Außenwelle 25 im Innenrohr 10. Vorteilhaft sind mehrere Lagerteile 52 vorgesehen.

Wie Fig. 4 auch zeigt, sind das Innenrohr 10 und das Außenrohr 11 mit geringem radialem Spiel ineinandergeschoben. Bereits aufgrund der unrunden Querschnittsform von Innenrohr 10 und Außenrohr 11 ergibt sich dadurch eine Verdrehsicherung. Vorzugsweise sind zusätzlich Elemente vorgesehen, die eine Verdrehsicherung zwischen Innenrohr und Außenrohr bewirken. In bevorzugter Ausführung ist an dem in das Außenrohr ragenden Ende des Innenrohrs 10 ein Führungsteil 61 angeordnet, das das Innenrohr 10 in dem Außenrohr 11 führt.

Fig. 7 zeigt ein Führungsteil 61 am Ende des Innenrohrs 10 sowie ein weiteres Führungsteil 61, das in einem Abstand zum Ende des Innenrohrs 10 angeordnet ist. Am Außenumfang der Führungsteile 61 liegt das Außenrohr 11 an, wenn Innenrohr 10 und Außenrohr 11 weit genug ineinandergeschoben sind, wie Fig. 3 schematisch zeigt.

Wie Fig. 5 zeigt, besitzen die Spannringe 14 einen Innenrand 35, der am Außenumfang des Außenrohrs 10 anliegt. Der Innenrand 35 liegt dabei sowohl an den ebenen Seiten 32 als auch an den abgerundeten Ecken 33 an. Wie Fig. 5 auch zeigt, besitzen die Spannringe 14 einen Außenrand 36, der in radialem Abstand zur Innenseite des Spannstücks 13 liegt. An den abgerundeten Ecken des Spannstücks 13 ist dabei nur ein schmaler Spalt zwischen Spannring 14 und Spannstück 13 gebildet. Wie die Figuren 4 und 5 auch zeigen, ist das Innengewinde 17 des Spannstücks 13 mit drei Unterbrechungen 57 ausgeführt. Dadurch ist eine einfache Entformung bei der Herstellung des Spannstücks 13 in einem Spritzgussverfahren möglich.

Fig. 6 zeigt die Anlage des Endstücks 19 am Innenrohr 10. Der Führungsabschnitt 22 des Endstücks 19 ist durch einzelne Finger 64 gebildet, die parallel zur Längsmittelachse 30 verlaufen und die an den ebenen Seiten 32 des Innenrohrs 10 anliegen. An den abgerundeten Ecken 33 des Innenrohrs 10 liegt das Endstück 19 vorteilhaft nicht an. Da die ebenen Seiten 32 mit hoher Genauigkeit gefertigt werden, ergibt sich eine gute, genaue Führung. Die abgerundeten Ecken 33 können bei der Herstellung zum Toleranzausgleich genutzt werden.

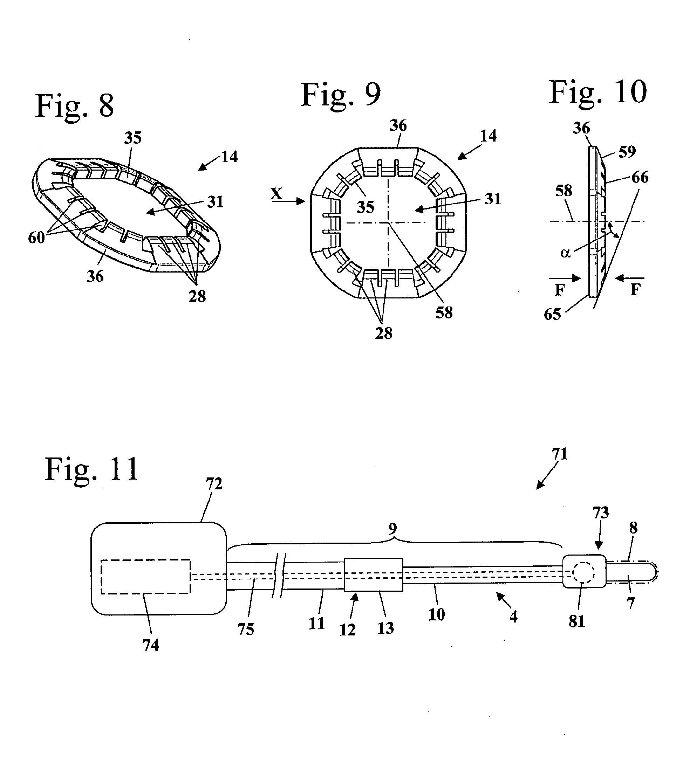

Die Figuren 8 bis 10 zeigen die Gestaltung eines Spannrings 14 im Einzelnen. Wie Fig. 8 zeigt, weist der Spannring 14 eine Vielzahl nach innen ragender Klemmfinger 28 auf. Die Stirnseiten der Klemmfinger 28 bilden den Innenrand 35 des Spannrings 14. Die einzelnen Klemmfinger 28 sind über etwa radial verlaufende Schlitze 60 voneinander getrennt. Der Innenrand 35 begrenzt eine Öffnung 31 des Spannrings 14, durch die das Innenrohr 10 ragt. Wie die Figuren 5 und 9 zeigen, sind im Ausführungsbeispiel jeweils drei Klemmfinger 28 zur Anlage an jeder ebenen Seite 32 und jeweils zwei Klemmfinger 28 zur Anlage an jeder abgerundeten Ecke 33 vorgesehen. Der Außenrand 36 ist als durchgehender Rand ausgebildet, der ebenfalls ebene Seiten aufweist, die über abgerundete Ecken miteinander verbunden sind. Dadurch ergibt sich eine näherungsweise gleiche Länge und Elastizität aller Klemmfinger 28. Der Spannring 14 besitzt eine Mittelachse 58, die in eingebautem Zustand mit der Längsmittelachse 30 des Führungsrohrs 4 zusammenfällt.

Wie die Figuren 8 und 10 zeigen, besitzt der Spannring 14 eine etwa kegelstumpfförmige Gestalt. Der Spannring 14 besitzt eine Stirnseite 59, die mit der Mittelachse 58 einen Winkel α einschließt, der beispielsweise von etwa 40° bis etwa 85° betragen kann. Im Ausführungsbeispiel ist ein Winkel α vorgesehen, der zwischen 60° und 80° beträgt. Der Spannring 14 besitzt eine erste axiale Seite 65, die an den Außenrand 36 angrenzt, sowie eine zweite axiale Seite 66, die an den Innenrand 35 angrenzt. Wird der Spannring 14 in axialer Richtung durch eine Spannkraft F zusammengedrückt, so verschwenken die Klemmfinger 28 nach innen und verringern die Größe der Öffnung 31. In unverspanntem Zustand der Klemmvorrichtung 12 liegen die Innenränder 35 der Spannringe 14 am Innenrohr 10 an, wie Fig. 3 zeigt. Bereits bei geringem Spannweg klemmen die Klemmfinger 28 das Innenrohr 11 dadurch und fixieren das Innenrohr 10 in Richtung der Längsmittelachse 30.

Fig. 11 zeigt ein Ausführungsbeispiel eines Hochentasters 71. Der Hochentaster 71 besitzt anstatt einer Antriebseinheit 2 ein Gehäuse 72, in dem ein Akku 74 angeordnet ist. Anstatt des Akkus 74 kann am Gehäuse 72 auch ein Stromkabel zur Verbindung mit einer Energieversorgung vorgesehen sein. An dem dem Gehäuse 72 abgewandten Ende des Führungsrohrs 4 ist eine Werkzeugeinheit 73 angeordnet, die eine Führungsschiene 7 und eine an der Führungsschiene 7 umlaufend angeordnete Sägekette 8 umfasst. Gleiche Bezugszeichen kennzeichnen dabei in allen Ausführungsbeispielen einander entsprechende Elemente. Der Hochentaster 71 besitzt ein Kabel 75, das den Akku 74 im Gehäuse 72 mit einem Antriebsmotor 81 der Werkzeugeinheit 73 verbindet. Das Kabel 75 ist vorteilhaft als Spiralkabel ausgebildet und besitzt neben Adern zur Energieversorgung auch Adern zur Signalübertragung. Der Antriebsmotor 81 ist als Elektromotor ausgebildet und über das Kabel 75 mit Energie versorgt. Das Kabel 75 ist durch das Führungsrohr 4 geführt und verläuft vollständig durch den Teleskopabschnitt 9, der sich im Ausführungsbeispiel nach Fig. 11 vom Gehäuse 72 bis zur Werkzeugeinheit 73 erstreckt.

## Patentansprüche

1. Handgeführtes Arbeitsgerät mit einem Antriebsmotor (41, 81) und mit einer Werkzeugeinheit (3, 73), wobei die Werkzeugeinheit (3, 73) ein von dem Antriebsmotor (41, 81) angetriebenes Werkzeug umfasst, wobei das Arbeitsgerät ein Führungsrohr (4) mit einem Teleskopabschnitt (9) besitzt, wobei der Teleskopabschnitt (9) ein Außenrohr (11) und ein darin längsverschiebbar geführtes Innenrohr (10) umfasst, wobei durch das Führungsrohr (4) Mittel zur Übertragung der Antriebsenergie für das Werkzeug geführt sind, und wobei eine Klemmvorrichtung (12) zur Fixierung des Innenrohrs (10) gegenüber dem Außenrohr (11) vorgesehen ist,
**dadurch gekennzeichnet, dass** die Klemmvorrichtung (12) ein Spannstück (13) umfasst, das gegenüber dem Innenrohr (10) drehbar gelagert ist und über eine Gewindeverbindung (16) mit dem Außenrohr (11) verbunden ist, dass die Klemmvorrichtung (12) mindestens einen am Außenumfang des Innenrohrs (10) angeordneten, gewölbten Spannring (14) umfasst, wobei ein Zusammendrücken des Spannrings (14) in Richtung einer Längsmittelachse des Führungsrohrs (4) eine Verkleinerung der Öffnung (31) des Spannrings (14) bewirkt, und dass der mindestens eine Spannring (14) sich an der einen axialen Seite (65, 66) gegenüber dem Außenrohr (11) und an der anderen axialen Seite (65, 66) gegenüber dem Spannstück (13) abstützt.

2. Arbeitsgerät nach Anspruch 1,
**dadurch gekennzeichnet, dass** am Außenrohr (11) ein Endstück (19) fixiert ist, das ein Außengewinde (20) der Gewindeverbindung (16) trägt.

3. Arbeitsgerät nach Anspruch 2,
**dadurch gekennzeichnet, dass** das Innenrohr (10) und das Außenrohr (11) einen von der Kreisform abweichenden Querschnitt aufweisen.

4. Arbeitsgerät nach Anspruch 3,
**dadurch gekennzeichnet, dass** der Querschnitt des Innenrohrs (10) ebene Seiten (32) besitzt, die über abgerundete Ecken (33) verbunden sind.

5. Arbeitsgerät nach Anspruch 4,
**dadurch gekennzeichnet, dass** das Innenrohr (10) an mindestens einer seiner ebenen Seiten (32) verdrehsicher gegenüber dem Außenrohr (11) gehalten ist.

6. Arbeitsgerät nach Anspruch 4 oder 5,
**dadurch gekennzeichnet, dass** das Endstück (19) mindestens teilweise an der Außenkontur des Innenrohrs (10) anliegt und das Innenrohr (10) und das Außenrohr (11) verdrehsicher zueinander positioniert.

7. Arbeitsgerät nach Anspruch 6,
**dadurch gekennzeichnet, dass** das Endstück (19) nur an den ebenen Seiten (32) des Innenrohrs (10) und nicht an den abgerundeten Ecken (33) anliegt.

8. Arbeitsgerät nach einem der Ansprüche 2 bis 7,
**dadurch gekennzeichnet, dass** das Spannstück (13) eine Druckfläche (29) aufweist, an der sich der mindestens eine Spannring (14) axial abstützt, und dass das Endstück (19) an seiner der Druckfläche (29) abgewandten Seite Mittel zur Zentrierung des Spannstücks (13) besitzt.

9. Arbeitsgerät nach einem der Ansprüche 1 bis 8,
**dadurch gekennzeichnet, dass** der mindestens eine Spannring (14) radial nach innen ragende Klemmfinger (28) aufweist, die in verspanntem Zustand mit ihrem freien Ende gegen das Innenrohr (10) drücken.

10. Arbeitsgerät nach einem der Ansprüche 1 bis 9,
**dadurch gekennzeichnet, dass** der mindestens eine Spannring (14) in ungespanntem Zustand am Innenrohr (10) anliegt, und dass der Außenrand (36) des mindestens einen Spannrings (14) zum Spannstück (13) einen radialen Abstand besitzt.

11. Arbeitsgerät nach einem der Ansprüche 1 bis 10,
**dadurch gekennzeichnet, dass** mehrere Spannringe (14) vorgesehen sind, wobei benachbarte Spannringe (14) jeweils benachbart zu ihren Innenrändern (35) oder benachbart zu ihren Außenrändern (36) aneinander anliegen.

12. Arbeitsgerät nach einem der Ansprüche 1 bis 11,
**dadurch gekennzeichnet, dass** der mindestens eine Spannring (14) aus Kunststoff ist.

13. Arbeitsgerät nach einem der Ansprüche 1 bis 12,
**dadurch gekennzeichnet, dass** der Antriebsmotor Teil einer Antriebseinheit (2) ist, die an einem ersten Ende (5) des Führungsrohrs (4) angeordnet ist, dass die Werkzeugeinheit (3) an einem zweiten Ende (6) des Führungsrohrs (4) angeordnet ist, und dass durch das Führungsrohr (4) eine Antriebswelle (23) ragt, die als Teleskopwelle ausgebildet ist.

14. Arbeitsgerät nach Anspruch 13,
**dadurch gekennzeichnet, dass** die Antriebswelle (23) über mindestens ein Lagerteil (52) in dem Innenrohr (10) gelagert ist.
